Europäisches Patentamt

European Patent Office

Office européen des brevets

(19)

(11) Publication number : **0 328 217 B1**

(12) # EUROPEAN PATENT SPECIFICATION

(45) Date of publication of patent specification :
**28.10.92 Bulletin 92/44**

(51) Int. Cl.$^5$ : **A01N 43/08, A01N 25/02**

(21) Application number : **89200275.9**

(22) Date of filing : **06.02.89**

(54) **Ethofumesate concentrate.**

(30) Priority : **08.02.88 NL 8800296**

(43) Date of publication of application :
**16.08.89 Bulletin 89/33**

(45) Publication of the grant of the patent :
**28.10.92 Bulletin 92/44**

(84) Designated Contracting States :
**AT BE CH DE ES FR GB IT LI NL**

(56) References cited :
**EP-A- 0 116 229**
**GB-A- 2 022 070**
**US-A- 3 188 194**

(73) Proprietor : **AGRICHEM B.V.**
**Koopvaardijweg 9**
**NL-4906 CV Oosterhout (NL)**

(72) Inventor : **Mureau-Lens, Maria Catharina**
**Kerkuil 2**
**NL-4822 PA Breda (NL)**
Inventor : **Van der Westen, Nicolaas Johannes**
**Maria**
**Reigerstraat 26**
**NL-4901 AH Oosterhout (NL)**

(74) Representative : **Schumann, Bernard Herman**
**Johan et al**
**OCTROOIBUREAU ARNOLD & SIEDSMA**
**Sweelinckplein 1**
**NL-2517 GK The Hague (NL)**

## Description

The invention relates to an ethofumesate concentrate.

Ethofumesate ((±)-2-ethoxy-2,3-dihydro-3,3-dimethyl benzofuran-5-yl methane sulphonate) is used as a herbicide against grasses and broad-leaf weed.

The ethofumesates currently available on the market contain, in addition to an emulsifying agent or mixture of emulsifying agents, xylene as solvent. Since there are ecological and toxic objections attaching to xylene there is a great need for a new ethofumesate concentrate on the basis of a solvent which possesses to a considerably lesser extent the above stated drawbacks inherent to xylene, but which must preserve the other favourable properties of xylene. These favourable properties are:

1. the concentrate must be clear and contain no crystals larger than or equal to 40 micrometers after storage over a longer period; and

2. when the concentrate is poured into water a stable emulsion must occur in which once again no crystal formation may take place.

Crystal formation is disadvantageous because on the one hand the active effect of the concentrate and the emulsion declines and on the other hand the crystals can result in complications during spreading, since the sprayers may become blocked.

After lengthy experimentation a solvent has been found which on the one hand possesses the above stated advantages and which on the other hand has a cost price such that the ethofumesate concentrate can be put on the market at an acceptable price.

The solvent meeting these stated requirements is tributyl phosphate. The concentrate for emulsifying according to the invention is therefore characterized in that in addition to ethofumesate and an emulsifying agent or mixture thereof it contains tributyl phosphate as organic solvent. Ethofumesate dissolves well in tributyl phosphate and the thereby formed concentrates generally contain 25-400 g/l ethofumesate or more particularly 100-300 g/l ethofumesate.

The invention further relates to an ethofumesate emulsion obtained by diluting the concentrate for emulsifying with water to a conventionally usable ethofumesate concentrate in water.

Finally, the invention relates to a method for controlling weeds, particularly grass and broad-leaf weed whereby an ethofumesate emulsion in water is used which is obtained by dissolving in water an ethofumesate concentrate on the basis of tributyl phosphate.

As emulsifying agents can be used: calcium dodecyl benzene sulphonate, tristyryl phenol oxyethylene with c. 25 ethylene oxide groups and alkyl aryl sulphonate (emulsogem ITN, trade mark Hoechst). Other emulsifying agents can also be used per se or in mixtures.

Varying quantities of ethofumesate from 25 to 400 grams and 200 grams emulsifying agent (calcium dodecyl benzene sulphonate with emulsogem ITN) were added to and supplemented with tributyl phosphate up to one litre.

The lower limit for the ethofumesate concentration in the concentrate is only limited for commercial reasons, since when the concentrations of ethofumesate are low the cost of the solvent becomes comparatively high.

At room temperature the ethofumesate concentrates having a quantity of 25-300 grams ethofumesate per litre of tributyl phosphate displayed a clear, stable concentrate capable of emulsification in which occurred no crystal growth greater than 40 micrometers, as did the concentrates up to 400 g ethofumesate in one litre of tributyl phosphate at a higher temperature. When poured into water a fine emulsion resulted in which again no crystal growth occurred.

## Claims

### Claims for the following Contracting States: AT, BE, CH, DE, FR, GB, IT, LI, NL

1. Emulsifiable concentrate of ethofumesate and an emulsifying agent in an organic solvent, **characterized in that** the solvent is tributyl phosphate.

2. Concentrate as claimed in claim 1, **characterized in that** it contains 25-400 g/l ethofumesate.

3. Concentrate as claimed in claim 2, **characterized in that** it contains 100-300 g/l ethofumesate.

4. Ethofumesate emulsion in water obtained by diluting the concentrate as claimed in claims 1-3 with water to a conventionally active ethofumesate concentration.

5. Method for controlling weeds whereby a quantity of ethofumesate active as weed-killer is applied as an emulsion as claimed in claim 4 to plants and/or to the ground.

### Claims for the following Contracting State : ES

1. Method for the manufacture of an emulsifiable concentrate of ethofumesate and an emulsifying agent, wherein ethofumesate and the emulsifying agent are mixed with an organic solvent, **characterized in that** the solvent is tributyl phosphate.

2. Method as claimed in claim 1, **characterized in that** it contains 25-400 g/l ethofumesate.

3. Method as claimed in claim 2, **characterized in**

**that** it contains 100-300 g/l ethofumesate.

4. Method for the manufacture of an ethofumesate emulsion in water, wherein the concentrate obtained in the method of claims 1-3 is diluted with water to a conventionally active ethofumesate concentration.

5. Method for controlling weeds whereby a quantity of ethofumesate active as weed-killer is applied as an emulsion as claimed in claim 4 to plants and/or to the ground.

**Patentansprüche**

**Patentansprüche für folgenden Vertragsstaaten: AT, BE, CH, DE, FR, GB, IT, LI, NL**

1. Emulgierfähiges Konzentrat von Ethofumesat und einem Emulgiermittel in einem organischen Lösungsmittel,
dadurch **gekennzeichnet**, daß
das Lösungsmittel Tributylphosphat ist.

2. Konzentrat nach Anspruch 1,
dadurch **gekennzeichnet**, daß
es 25 bis 400 g/l Ethofumesat enthält.

3. Konzentrat nach Anspruch 2,
dadurch **gekennzeichnet**, daß
es 100 bis 300 g/l Ethofumesat enthält.

4. Ethofumesatemulsion in Wasser, erhalten durch Verdünnen des Konzentrats gemäß den Ansprüchen 1 bis 3 mit Wasser auf eine konventionell aktive bzw. wirksame Ethofumesat konzentration.

5. Verfahren zur Kontrolle von Unkräutern, bei welchem eine als Unkrautvertilgungsmittel wirksame Menge Ethofumesat in Form einer Emulsion nach Anspruch 4 auf Pflanzen und/oder dem Boden aufgebracht wird.

**Patentansprüche für folgenden Vertragsstaat: ES**

1. Verfahren zur Herstellung eines emulgierfähigen Konzentrats von Ethofumesat und einem Emulgiermittel, bei welchem Ethofumesat und das Emulgiermittel mit einem organischen Lösungsmittel gemischt werden,
dadurch **gekennzeichnet**,
daß das Lösungsmittel Tributylphosphat ist.

2. Verfahren nach Anspruch 1,
dadurch **gekennzeichnet**, daß

es 25 bis 400 g/l Ethofumesat enthält.

3. Verfahren nach Anspruch 2,
dadurch **gekennzeichnet**, daß
es 100 bis 300 g/l Ethofumesat enthält.

4. Verfahren zur Herstellung einer Ethofumesatemulsion in Wasser, bei welchem das nach dem Verfahren gemäß den Ansprüchen 1 bis 3 erhaltene Konzentrat mit Wasser auf eine konventionell aktive bzw. wirksame Ethofumesatkonzentration verdünnt wird.

5. Verfahren zur Kontrolle von Unkräutern, bei welchem eine als Unkrautvertilgungsmittel wirksame Menge Ethofumesat in Form einer Emulsion nach Anspruch 4 auf Pflanzen und/oder dem Boden aufgebracht wird.

**Revendications**

**Revendications pour les Etats contractants suivants: AT, BE, CH, DE, FR, GB, IT, LI, NL**

1.- Concentré d'éthofumésate et d'un agent émulsifiant dans un solvant organique, caractérisé en ce que le solvant est le tributyl phosphate.

2.- Concentré selon la revendication 1, caractérisé en ce qu'il comprend 25 à 400 g/l d'éthofumésate.

3.- Concentré selon la revendication 2, caractérisé en ce qu'il contient 100 à 300 g/l d'éthofumésate.

4.- Emulsion d'éthofumésate dans l'eau obtenue en diluant le concentré selon l'une des revendications 1 à 3 avec l'eau pour obtenir une concentration d'éthofumésate active classique.

5.- Procédé de contrôle des mauvaises herbes dans lequel une quantité d'éthofumésate actif constituant l'herbicide est répandue sur les plantes et/ou sur le sol sous la forme d'une émulsion selon la revendication 4.

**Revendications pour l'Etat contractant suivant: ES**

1.- Procédé de fabrication d'un concentré émulsifiable d'éthofumésate et d'un agent émulsifiant, dans lequel on mélange l'éthofumésate et l'agent émulsifiant avec un solvant organique, caractérisé en ce que le solvant est le tributyl phosphate.

2.- Procédé selon la revendication 1, caractérisé en ce qu'il contient 25 à 400 g/l d'éthofumésate.

3.- Procédé selon la revendication 2, caractérisé en ce qu'il contient 100 à 300 g/l d'éthofumésate.

4.- Procédé de fabrication d'une émulsion d'éthofumésate dans l'eau, dans lequel on dilue le concentré obtenu par le procédé des revendications 1 à 3 avec de l'eau jusqu'à obtenir une concentration d'éthofumésate actif classique.

5.- Procédé de contrôle des mauvaises herbes, dans lequel on répand sur les plantes et/ou sur le sol une quantité d'éthofumésate, en qualité d'herbicide, sous la forme d'une émulsion selon la revendication 4.